# EUROPÄISCHE PATENTSCHRIFT

(11) **EP 3 715 184 B1**
(45) Veröffentlichungstag und Bekanntmachung des Hinweises auf die Patenterteilung: **08.09.2021**
(21) Anmeldenummer: 20157487.8
(22) Anmeldetag: 14.02.2020
(51) Int. Cl.: B60R 19/02, B60R 19/34, B60D 1/56

(54) **STOSSFÄNGERANORDNUNG**
BUMPER ARRANGEMENT
AGENCEMENT DE PARE-CHOCS

(30) Priorität: 28.03.2019 DE 102019108043
(43) Veröffentlichungstag der Anmeldung: 30.09.2020
(73) Patentinhaber: Benteler Automobiltechnik GmbH, 33102 Paderborn (DE)
(72) Erfinder: FIGUEIREDO, Bernardo, 2816 Gjøvik (NO)
(74) Vertreter: Patentship Patentanwaltsgesellschaft mbH

(56) Entgegenhaltungen:
- WO-A2-2004/069595
- DE-A1-102013 007 263
- DE-A1-102014 107 320
- DE-A1-102015 121 152

## Beschreibung

Die vorliegende Offenbarung betrifft eine Stoßfängeranordnung für ein Fahrzeug.

Eine Stoßfängeranordnung wird typischerweise in einem Front- und/oder Heckbereich des Fahrzeugs angeordnet, um hinter der Stoßfängeranordnung liegende Fahrzeugteile bei einem Fahrzeugaufprall vor einer wirkenden Aufprallenergie zu schützen. Die Stoßfängeranordnung kann entsprechende Verbindungselemente, bzw. Aufprall-Box, in Form von Hohlkammerprofilen aufweisen, welche bei einem Fahrzeugaufprall durch Deformation in Richtung der Krafteinwirkung Aufprallenergie absorbieren. Die Stoßfängeranordnung kann ferner ein Abschleppmittel aufweisen, mit welchem das Fahrzeug abgeschleppt werden kann. Die Stoßfängeranordnung kann beispielsweise eine Stoßstange umfassen, an welcher das Abschleppmittel angeordnet ist, wobei eine Abschleppzugkraft über die Stoßstange in das Fahrzeug eingeleitet werden kann.

In der US 9,884,599 B2 ist eine Fahrzeugvorderstruktur mit einer Stoßstange und einer mit der Stoßstange verbundenen Aufprallbox offenbart, wobei ein Eckenstabilisierungsbauteil zwischen der Stoßstange und der Aufprallbox angeordnet ist.

In der US 9,393,923 B2 ist eine Stoßstangenanordnung offenbart, welche einer Stoßstange aufweist, welche mit Aufprallboxen verbunden ist, und welche ein querlaufendes Bauteil aufweist.

Die Druckschrift WO 2004/069595 A2 beschreibt eine Stoßfängeranordnung nach dem Oberbegriff des Anspruchs 1.

Es ist die Aufgabe der vorliegenden Offenbarung, eine effiziente Stoßfängeranordnung mit einem Strukturbauteil zur Aufnahme einer Abschleppvorrichtung bereitzustellen, wobei die Stoßfängeranordnung eine vorteilhafte Aufnahme von Aufprallenergie realisiert.

Diese Aufgabe wird durch die Merkmale des unabhängigen Anspruchs gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch eine Stoßfängeranordnung nach Anspruch 1 gelöst werden kann, welche einen Stoßfänger zur Aufnahme von Aufprallenergie aufweist, und welche ein Deformationsprofil, beispielsweise eine Aufprall-Box aufweist, um den Stoßfänger an einem Fahrzeugbauteil zu befestigen.

Um eine wirksame Stabilisierung der Stoßfängeranordnung zu erreichen, erstreckt sich ein Stützprofil eines Stützelements winklig zwischen dem Deformationsprofil und dem Stoßfänger. Hierbei weist das Stützelement einen mit dem Stützprofil verbundenen Abschleppabschnitt auf, welcher innerhalb oder an dem Stoßfänger befestigt ist und eine Öffnung zum Aufnehmen des Abschleppmittels aufweist.

Somit kann das Abschleppmittel auf einer dem Deformationsprofil abgewandten Seite des Stoßfängers an dem Abschleppabschnitt des Stützelements befestigt werden und das Stützprofil des Stützelements stabilisiert die Stoßfängeranordnung, wenn bei einem Aufprallunfall Aufprallenergie auf die Stoßfängeranordnung wirkt.

Gemäß einem ersten Aspekt betrifft die Offenbarung eine Stoßfängeranordnung nach Anspruch 1.

Dadurch wird der technische Vorteil erreicht, dass durch das sich winklig zwischen dem Deformationsprofil und dem Stoßfänger erstreckende Stützprofil des Stützelements eine überbrückende Stabilisierung der Verbindungsstelle zwischen dem Deformationsprofil und dem Stoßfänger sichergestellt wird, wenn bei einem Aufprall des Fahrzeugs auf ein Hindernis Aufprallenergie auf die Stoßfängeranordnung wirkt.

Insbesondere ist das Stützprofil als ein längliches Stützprofil ausgebildet.

Hierbei wird die auf den Stoßfänger bei einem Aufprall wirkende Kraft durch das Stützelement möglichst großflächig zwischen dem Deformationsprofil und dem Stoßfänger verteilt, so dass das Auftreten von Kraftspitzen an der direkten Verbindungsstelle zwischen dem Deformationsprofil und dem Stoßfänger vermieden und Schweißverbindungen oder Schraubverbindungen entlastet werden.

Insbesondere ist das Deformationsprofil durch eine Profilwand begrenzt, welche eine Profilachse aufweist, welche sich winklig zu der Stoßfängerachse erstreckt. Insbesondere weist das Deformationsprofil zumindest eine Hohlkammer auf, welche durch die Profilwand begrenzt ist.

Der Stoßfänger kann insbesondere eine Stoßstange sein, welche quer zu einer Fahrtrichtung des Fahrzeugs angeordnet ist und das Fahrzeug begrenzt. Der Stoßfänger kann zumindest einen Aufnahmeabschnitt aufweisen, mit welchem der Stoßfänger an dem Deformationsprofil anordenbar ist. Insbesondere kann der Stoßfänger an dem Deformationsprofil mittels einer Stoffschlussverbindung, insbesondere mittels einer Schweißverbindung und/oder mittels einer Kraftschlussverbindung, insbesondere einer Niet- oder Schraubverbindung befestigt sein. Insbesondere kann der Stoßfänger ein Einkammerprofil oder ein Zweikammerprofil aufweisen, wobei das Zweikammerprofil insbesondere eine erste Hohlkammer und eine zweite Hohlkammer umfasst, wobei die erste und zweite Hohlkammer durch eine horizontale Zwischenwandung getrennt wird. Insbesondere ist der Stoßfänger zumindest abschnittsweise entlang der Stoßfängerachse gekrümmt.

Das Fahrzeugbauteil kann insbesondere ein Fahrzeuglängsträger sein. Beispielsweise kann das Deformationsprofil mittels des zweiten Befestigungsabschnitts an eine Kraftleitungsstruktur des Fahrzeugs angebunden sein, um eine Aufprallenergie effizient in die Kraftleitungsstruktur einzuleiten, wobei die ursprüngliche Aufprallenergie durch Deformation des Stoßfängers und/oder des Deformationsprofils vermindert sein kann. Das Deformationsprofil und der Stoßfänger können rechtwinklig oder auch leicht geneigt zueinander angeordnet sein, wobei das Deformationsprofil mit dem ersten Befestigungsabschnitt in den Stoßfänger eingreifen kann und/oder der Stoßfänger den ersten Befestigungsabschnitt zumindest teilweise umschließt.

Insbesondere weist die Stoßfängeranordnung eine Mehrzahl von Deformationsprofilen, insbesondere zwei Deformationsprofile, auf, welche jeweils einen ersten Befestigungsabschnitt zum Befestigen des jeweiligen Deformationsprofils an dem Stoßfänger und welche jeweils einen zweiten Befestigungsabschnitt zum Befestigen des jeweiligen Deformationsprofils an dem Fahrzeugbauteil aufweisen, und weist die Stoßfängeranordnung eine Mehrzahl von Stützelementen, insbesondere zwei Stützelemente, auf, wobei das wenigstens eine Stützelement ein Stützprofil, welches winklig zwischen dem jeweiligen Deformationsprofil und dem Stoßfänger verläuft, und einen Abschleppabschnitt zum Aufnehmen eines Abschleppmittels zum Abschleppen des Fahrzeugs aufweist, wobei das wenigstens eine Stützprofil mit dem Stoßfänger und mit dem jeweiligen Deformationsprofil verbunden ist, wobei der Abschleppabschnitt innerhalb oder an dem Stoßfänger befestigt ist und eine Öffnung zum Aufnehmen des Abschleppmittels aufweist.

Weist die Stoßfängeranordnung insbesondere eine Mehrzahl von Stützelementen auf, welche an dem jeweiligen Deformationsprofil und an dem Stoßfänger befestigt sind, weist insbesondere eines der Mehrzahl von Stützelementen einen Abschleppabschnitt mit einer Öffnung zum Aufnehmen des Abschleppmittels auf, und weisen insbesondere die anderen der Mehrzahl von Stützelementen keine Öffnungen zum Aufnehmen des Abschleppmittels auf.

Erfindungsgemäß erstreckt sich das Stützprofil entlang einer Stützprofillängsachse, wobei sich das Deformationsprofil entlang einer Profilachse erstreckt, und wobei die Stützprofillängsachse und die Profilachse einen Winkel zwischen 30° und 70° einschließen.

Dadurch wird der technische Vorteil erreicht, dass durch die winklige Erstreckung des Stützprofils des Stützelements gegenüber dem Deformationsprofil eine besonders wirksame stützende Stabilisierung des Stoßfängers, insbesondere des Stoßfängerendes, durch das Stützelement sichergestellt wird.

Erfindungsgemäß weist das Stützprofil ein erstes Befestigungsende auf, welches mit dem Deformationsprofil stoffschlüssig, formschlüssig und/oder kraftschlüssig verbunden ist, wobei das erstes Befestigungsende insbesondere eine mit dem Deformationsprofil stoffschlüssig, formschlüssig und/oder kraftschlüssig verbundene Befestigungskante oder Befestigungsfläche aufweist, und weist das Stützprofil ein zweites Befestigungsende auf, welches mit dem Abschleppabschnitt stoffschlüssig verbunden ist, und wobei sich der Abschleppabschnitt von dem zweiten Befestigungsende aus erstreckt.

Dadurch wird der technische Vorteil erreicht, dass durch die stoffschlüssige, formschlüssige und/oder kraftschlüssige Verbindung zwischen dem Deformationsprofil und dem Stützprofil des Stützelements eine besonders stabile Anbindung des Stützelements an dem Deformationsprofil sichergestellt werden kann. Insbesondere weist das erste Befestigungsende des Stützprofils eine mit dem Deformationsprofil stoffschlüssig, formschlüssig und/oder kraftschlüssig verbundene Befestigungskante oder Befestigungsfläche auf. Eine Befestigungsfläche stellt hierbei einen größeren Verbindungsbereich zu dem Deformationsprofil bereit, als eine Befestigungskante. Wird eine Befestigungskante an dem ersten Befestigungsende verwendet, resultiert durch die verkürzte Anbindungswand ein verringerter Deformationseinfluss.

Die stoffschlüssige Verbindung zwischen dem zweiten Befestigungsende des Stützprofils und dem sich von dem zweiten Befestigungsende aus erstreckenden Abschleppabschnitt stellt eine stabile Aufnahme von auf den Abschleppabschnitt wirkenden Kräften durch das gesamte Stützelement und eine verbesserte Lastverteilung im Crashfall sicher.

In einer vorteilhaften Ausführungsform sind das Stützprofil und der Abschleppabschnitt einstückig ausgebildet. Insbesondere sind diese als einziges Strangpressprofil und aus einer Leichtmetalllegierung hergestellt.

Dadurch wird der technische Vorteil erreicht, dass die einstückige Ausbildung von Stützprofil und Abschleppabschnitt ein als ein Bauteil geformtes Stützelement sicherstellt, welches vorteilhaft gefertigt werden kann und über den Abschleppabschnitt einwirkende Kräfte vorteilhaft aufnehmen kann.

In einer vorteilhaften Ausführungsform erstreckt sich der Abschleppabschnitt winklig von dem Stützprofil oder bilden der Abschleppabschnitt und das Stützprofil ein bogenförmiges Stützelement, wobei insbesondere der Abschleppabschnitt und das Stützprofil in derselben Ebene angeordnet sind.

Dadurch wird der technische Vorteil erreicht, dass durch die winklige Erstreckung des Abschleppabschnitts gegenüber dem Stützprofil, oder durch die Ausbildung des Abschleppabschnitts und des Stützprofils als ein bogenförmiges Stützelement eine wirksame Übertragung von auf den Abschleppabschnitt wirkenden Kräfte über das Stützprofil auf das Deformationsprofil sichergestellt werden kann, so dass die Kräfte in der Stoßfängeranordnung großflächig verteilt werden können.

In einer vorteilhaften Ausführungsform weist die Stoßfängeranordnung ein Innengewinde, welches in der Öffnung aufgenommen und mit dem Abschleppabschnitt integriert ausgebildet ist, oder ein Aufnahmebauteil mit einem Innengewinde auf, welches in der Öffnung aufgenommen und mit dem Abschleppabschnitt verbunden ist, auf, wobei das Innengewinde ausgebildet ist, ein Abschleppmittel insbesondere einen Abschlepphaken, zum Abschleppen eines Fahrzeugs aufzunehmen.

Dadurch wird der technische Vorteil erreicht, dass durch das in der Öffnung des Abschleppabschnitts integrierte Innengewinde, bzw. das in der Öffnung angeordnete Aufnahmebauteil mit Innengewinde eine wirksame strukturelle Anbindung des Abschleppmittels, insbesondere Abschlepphaken, an das Stützelement sichergestellt werden kann.

In einer vorteilhaften Ausführungsform ist in dem Stützprofil eine Aussparung gebildet, wobei die Aussparung durch zumindest eine Stützwand des Stützprofils begrenzt ist.

Dadurch wird der technische Vorteil erreicht, dass die zumindest eine Stützwand des Stützprofils die Stabilität des Stützprofils sicherstellen, wohingegen durch die Aussparung das Gewicht des Stützelements reduziert werden kann. Insbesondere ist die Aussparung vollständig durch eine Mehrzahl von Stützwänden begrenzt. Insbesondere ist die Aussparung nur abschnittsweise durch zumindest eine Stützwand begrenzt, wobei die zumindest eine Stützwand insbesondere ein I- oder L-förmiges Profil aufweist.

In einer vorteilhaften Ausführungsform weist der Stoßfänger eine dem Deformationsprofil zugewandte erste Stoßfängerseite und eine dem Deformationsprofil abgewandte zweite Stoßfängerseite auf, wobei das Stützprofil insbesondere einen Stützprofilflansch aufweist, welcher mit der ersten Stoßfängerseite verbunden ist.

Dadurch wird der technische Vorteil erreicht, dass durch den an der ersten Stoßfängerseite anliegenden Stützprofilflansch eine besonders wirksame stabilisierende Verbindung zwischen dem Stützprofil und dem Stoßfänger bereitgestellt werden kann. Insbesondere ist hierbei der Stützprofilflansch mit der ersten Stoßfängerseite stoffschlüssig verbunden, insbesondere verschweißt.

In einer vorteilhaften Ausführungsform schließt der Abschleppabschnitt mit einer Profilwand des Stoßfängers an der zweiten Stoßfängerseite bündig ab oder ragt über eine Profilwand des Stoßfängers an der zweiten Stoßfängerseite hinaus.

Durch das bündige Abschließen des Abschleppabschnitts mit der zweiten Stoßfängerseite, bzw. durch das Hinausragen des Abschleppabschnitts über zweite Stoßfängerseite, kann die Verbindung zwischen dem Abschleppabschnitt und dem Stoßfänger besonders vorteilhaft an die jeweilige Bausituation in der Stoßfängeranordnung angepasst werden.

In einer vorteilhaften Ausführungsform weist der Stoßfänger ein Einkammerprofil auf und ist eine Stoßfängerhöhe des Stoßfängers größer als das 1,2-fache, insbesondere größer als das 1,5-fache, einer Stoßfängertiefe des Stoßfängers, oder weist der Stoßfänger ein Zweikammerprofil auf und ist eine Stoßfängerhöhe des Stoßfängers größer als das 1,3-fache, insbesondere größer als das 1,6-fache, einer Stoßfängertiefe des Stoßfängers oder eines offenen Kammerprofils des Stoßfängers.

Dadurch wird der technische Vorteil erreicht, dass durch das jeweilige Verhältnis zwischen Stoßfängertiefe und Stoßfängerhöhe in Abhängigkeit des Profils des Stoßfängers ein besonders leichter und dennoch stabiler Stoßfänger bereitgestellt werden kann. Insbesondere erstreckt sich die Stoßfängertiefe von einer dem Deformationsprofil zugewandten ersten Stoßfängerseite des Stoßfängers zu einer dem Deformationsprofil abgewandten zweiten Stoßfängerseite des Stoßfängers. Insbesondere erstreckt sich die Stoßfängerhöhe von einer einem Boden zugewandten unteren Stoßfängerseite des Stoßfängers zu einer einem Boden abgewandten oberen Stoßfängerseite des Stoßfängers.

In einer vorteilhaften Ausführungsform ist in dem Stoßfänger ein Durchbruch gebildet, welcher durch das Abschleppmittel durchsetzbar ist, wobei der Abschleppabschnitt des Stützelements den Durchbruch durchsetzt.

Dadurch wird der technische Vorteil erreicht, dass durch den den Durchbruch durchsetzenden Abschleppabschnitt eine wirksame Befestigung eines Abschleppmittels an dem Abschleppabschnitt sichergestellt werden kann.

In einer vorteilhaften Ausführungsform weist der Stoßfänger eine untere Stoßfängerseite, welche einem Boden zugewandt ist, und eine obere Stoßfängerseite, welche einem Boden abgewandt ist, auf, wobei der Abschleppabschnitt an der unteren Stoßfängerseite und/oder an der oberen Stoßfängerseite befestigt ist.

Dadurch wird der technische Vorteil erreicht, dass durch die Befestigung des Abschleppabschnitts an der oberen und/oder unteren Stoßfängerseite eine wirksame Befestigung zwischen dem Abschleppabschnitt und dem Stoßfänger sichergestellt werden kann, ohne dass ein Durchbruch in den Stoßfänger eingebracht werden muss.

In einer vorteilhaften Ausführungsform ist der zweite Befestigungsabschnitt durch einen Flansch gebildet, welcher insbesondere mittels integriertem Ausformen, bzw. Strangpressen oder Anfügen mit dem Deformationsprofil gebildet ist.

Dadurch wird der technische Vorteil erreicht, dass durch den Flansch eine besonders vorteilhafte Befestigung des Deformationsprofils mit dem Fahrzeugbauteil sichergestellt werden kann. Durch den Flansch kann insbesondere eine Auflagefläche des zweiten Befestigungsabschnitts auf dem Fahrzeugbauteil vergrößert werden. Ferner kann der Flansch ein Abknicken des Deformationsprofils in Bezug auf das Fahrzeugbauteil bei einer Krafteinwirkung auf das Deformationsprofil verhindern. Insbesondere kann eine Steifigkeit des Deformationsprofils bei einem Wirken von nicht axialen, d.h. winklig in Bezug auf eine Profilachse des Deformationsprofils angreifenden Kräften, durch den Flansch erhöht sein.

Insbesondere kann auch der erste Befestigungsabschnitt durch einen Flansch gebildet sein, um die Stoßstange an dem Deformationsprofil mittels des Flansches insbesondere stoffschlüssig oder kraftschlüssig zu befestigen.

Weitere Ausführungsbeispiele werden Bezug nehmend auf die beiliegenden Figuren erläutert. Es zeigen:
- Fig. 1: eine Stoßfängeranordnung gemäß einer ersten Ausführungsform;
- Fig. 2: eine Stoßfängeranordnung gemäß einer zweiten Ausführungsform;
- Fig. 3: eine Stoßfängeranordnung gemäß einer dritten Ausführungsform;
- Figs. 4A, 4B: Stoßfängeranordnungen gemäß weiterer Ausführungsformen;
- Figs. 5A, 5B, 5C: Stützelemente von Stoßfängeranordnungen gemäß weiterer Ausführungsformen;
- Figs. 6A, 6B, 6C, 6D: in Stoßfängern angeordnete Stützelemente gemäß weiterer Ausführungsformen;
- Figs. 7A, 7B: Stoßfängeranordnungen gemäß weiterer Ausführungsformen; und
- Fig. 8: eine Stoßfängeranordnung gemäß einer weiteren Ausführungsform.

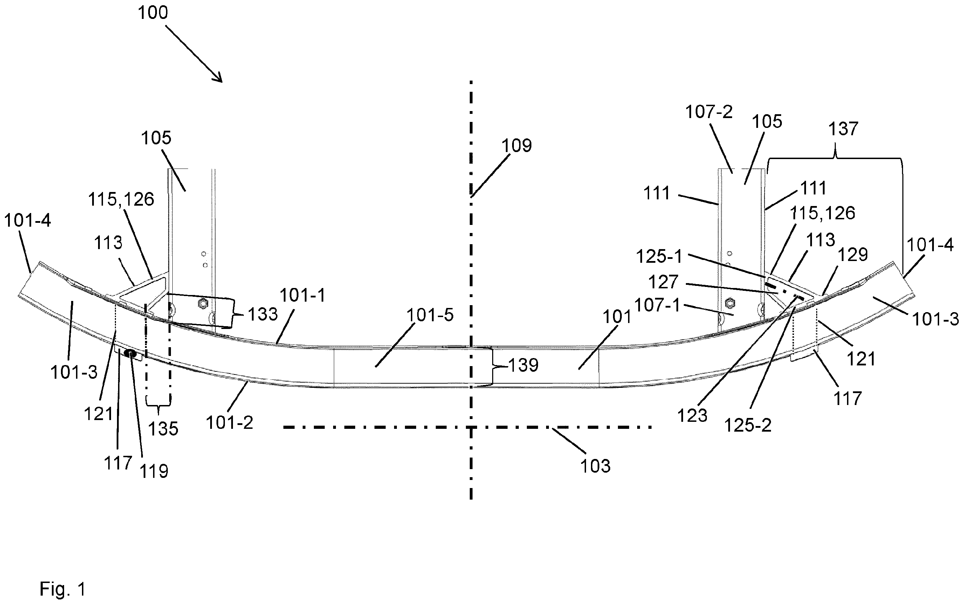

Fig. 1 zeigt eine schematische Perspektivansicht einer Stoßfängeranordnung 100 für ein Fahrzeug gemäß einer ersten Ausführungsform.

Die Stoßfängeranordnung 100 weist einen Stoßfänger 101 auf, welcher entlang einer Stoßfängerachse 103 verläuft und ausgebildet ist, Aufprallenergie aufzunehmen. Insbesondere verläuft der Stoßfänger 101 zumindest abschnittsweise gekrümmt entlang der Stoßfängerachse 103.

Die Stoßfängeranordnung 100 weist ferner zumindest ein Deformationsprofil 105, insbesondere zwei Deformationsprofile 105, zum Befestigen des Stoßfängers 101 an einem in Fig. 1 nicht dargestellten Fahrzeugbauteil auf. Das Fahrzeugbauteil kann insbesondere ein Fahrzeuglängsträger sein.

Die beiden Deformationsprofile 105 sind jeweils an einem Stoßfängerendabschnitt 101-3 des Stoßfängers 101 angeordnet, wobei die Stoßfängerendabschnitte 101-3 jeweils durch ein Stoßfängerende 101-4 begrenzt sind.

Die beiden Stoßfängerendabschnitte 101-3 sind hierbei durch einen Stoßfängerverbindungsabschnitt 101-5 verbunden. Insbesondere erstreckt sich der Stoßfängerverbindungsabschnitt 101-5 parallel zur Stoßfängerachse 103 und erstrecken sich die beiden Stoßfängerendabschnitte 101-3 gekrümmt zur Stoßfängerachse 103.

Das zumindest eine Deformationsprofil 105 weist einen ersten Befestigungsabschnitt 107-1 zum Befestigen des Deformationsprofils 105 an dem Stoßfänger 101 und einen zweiten Befestigungsabschnitt 107-2 zum Befestigen des Deformationsprofils 105 an dem Fahrzeugbauteil auf.

Hierbei erstreckt sich das Deformationsprofil 105 entlang einer Profilachse 109, wobei sich die Profilachse 109 winklig, insbesondere rechtwinklig, zu der Stoßfängerachse 103 erstreckt.

Ferner ist das Deformationsprofil 105 durch eine Profilwand 111 begrenzt.

Die Stoßfängeranordnung 100 weist ferner zumindest ein Stützelement 113 auf, insbesondere zwei Stützelemente 113 auf, wobei das zumindest eine Stützelement 113 ein Stützprofil 115, insbesondere ein längliches Stützprofil 115, aufweist, welches winklig zwischen dem jeweiligen Deformationsprofil 105 und dem Stoßfänger 101 verläuft.

Insbesondere kann die Stoßfängeranordnung 100 auch nur ein einziges Stützelement 113 mit einem Stützprofil 115 aufweisen, welches winklig zwischen einem der beiden Deformationsprofile 105 und dem Stoßfänger 101 verläuft, wobei das andere der beiden Deformationsprofile 105 ohne ein Stützelement 113 an dem Stoßfänger 101 befestigt ist.

Das zumindest eine Stützelement 113 weist ferner einen Abschleppabschnitt 117 zum Aufnehmen eines in Fig. 1 nicht dargestellten Abschleppmittels zum Abschleppen des Fahrzeugs auf. Das Stützprofil 115 ist hierbei insbesondere stoffschlüssig mit dem Stoßfänger 101 und mit dem Deformationsprofil 105 verbunden.

Der Abschleppabschnitt 117 durchsetzt den Stoßfänger 101, insbesondere einen Durchbruch 121 des Stoßfängers 101, und weist eine Öffnung 119 zum Aufnehmen des Abschleppmittels auf. Hierbei ist in dem Stoßfänger 101 ein Durchbruch 121 gebildet, welcher durch das Abschleppmittel durchsetzbar ist. Insbesondere umfasst das Abschleppmittel einen Abschlepphaken.

Wie in der Fig. 1 dargestellt ist, weist insbesondere ein einziges Stützelement 113 einer Mehrzahl von Stützelementen 113 in dem Abschleppabschnitt 117 eine Öffnung 119 zum Aufnehmen des Abschleppmittels auf, und weist insbesondere das andere Stützelement 113 der Mehrzahl von Stützelementen 113 in dem Abschleppabschnitt 117 keine Öffnung 119 auf, so dass das andere Stützelement 113 lediglich eine stützende Funktion beim Abschleppen des Fahrzeugs, bei der Fahrzeugverschiffung oder bei einem Fahrzeugaufprall sicherstellt.

Das Stützprofil 115 und der Abschleppabschnitt 117 des zumindest einen Stützelements 113 sind insbesondere einstückig ausgebildet.

Das Stützprofil 115 erstreckt sich entlang einer Stützprofillängsachse 123, wobei die Stützprofillängsachse 123 und die Profilachse 109 winklig zueinander verlaufen.

Das Stützprofil 115 weist ein erstes Befestigungsende 125-1 auf, welches mit dem Deformationsprofil 105 stoffschlüssig verbunden ist, wobei das erste Befestigungsende 125-1 insbesondere eine Befestigungsfläche umfasst. Das Stützprofil 115 weist ein zweites Befestigungsende 125-2 auf, welches mit dem Abschleppabschnitt 117 stoffschlüssig verbunden ist, und wobei sich der Abschleppabschnitt 117 von dem zweiten Befestigungsende 125-2 aus in Richtung von dem Fahrzeugbauteil weg erstreckt.

Hierbei erstreckt sich der Abschleppabschnitt 117 winklig von dem Stützprofil 115, und sind insbesondere der Abschleppabschnitt 117 und das Stützprofil 115 in derselben Ebene angeordnet. Insbesondere ist in dem Stützprofil 115 eine Aussparung 127 gebildet, welche zumindest abschnittsweise durch zumindest eine Stützwand 126 begrenzt ist.

Der in dem Stoßfänger 101 gebildete Durchbruch 121 erstreckt von einer dem Deformationsprofil 105 zugewandten ersten Stoßfängerseite 101-1 des Stoßfängers 101 zu einer dem Deformationsprofil 105 abgewandten zweiten Stoßfängerseite 101-2 des Stoßfängers 101. Das Stützprofil 115 weist insbesondere einen Stützprofilflansch 129 auf, welcher mit der ersten Stoßfängerseite 101-1 verbunden ist.

Insbesondere schließt der Abschleppabschnitt 117 mit der zweiten Stoßfängerseite 101-2 bündig ab oder ragt über die zweite Stoßfängerseite 101-2 hinaus. In der in Fig. 1 dargestellten ersten Ausführungsform ragt der Abschleppabschnitt 117 über die zweite Stoßfängerseite 101-2 des Stoßfängers 101 hinaus, so dass dieser mit der zweiten Stoßfängerseite 101-2, bzw. einer Profilwand der zweiten Stoßfängerseite 101-2 gefügt sein kann.

Wie aus der Fig. 1 hervorgeht, ist das zumindest eine Stützelement 113 insbesondere mit der Seite des Deformationsprofils 105 verbunden, welches dem jeweiligen Stoßfängerende 101-4 des Stoßfängerendabschnitts 101-3, in dem das zumindest eine Stützelement 113 angeordnet ist, zugewandt ist.

Aus Übersichtlichkeitsgründen ist in der Fig. 1 nur eines der beiden Deformationsprofile 105 und nur eines der beiden Stützelemente 113 mit allen Bezugszeichen gekennzeichnet.

Bevorzugt beträgt ein erster Abstand 133 zwischen der Verbindung des Stützprofils 115 mit dem Deformationsprofil 105 und dem Stoßfänger-seitigen Ende des Deformationsprofils 105 andererseits mindestens 10 mm, bevorzugt mindestens eine halbe Stoßfängerbreite 139 des Stoßfängers 101, wobei sich die Stoßfängerbreite 139 von der ersten Stoßfängerseite 101-1 zu der zweiten Stoßfängerbreite 101-2 erstreckt.

Bevorzugt beträgt ein zweiter Abstand 135 zwischen einer ersten Ebene, die durch eine mit dem Stützprofil 115 verbundenen Wand aufgespannt wird, und einer zweiten Ebene, die durch eine zum Deformationsprofil 105 gerichteten Wand des Abschleppabschnitts 117 aufgespannt wird, mindestens 10 mm, bevorzugt mindestens eine halbe Stoßfängerbreite 139 des Stoßfängers 101, höchstens jedoch die Hälfte einer Länge 137 des Stoßfängerendabschnitts 101-3.

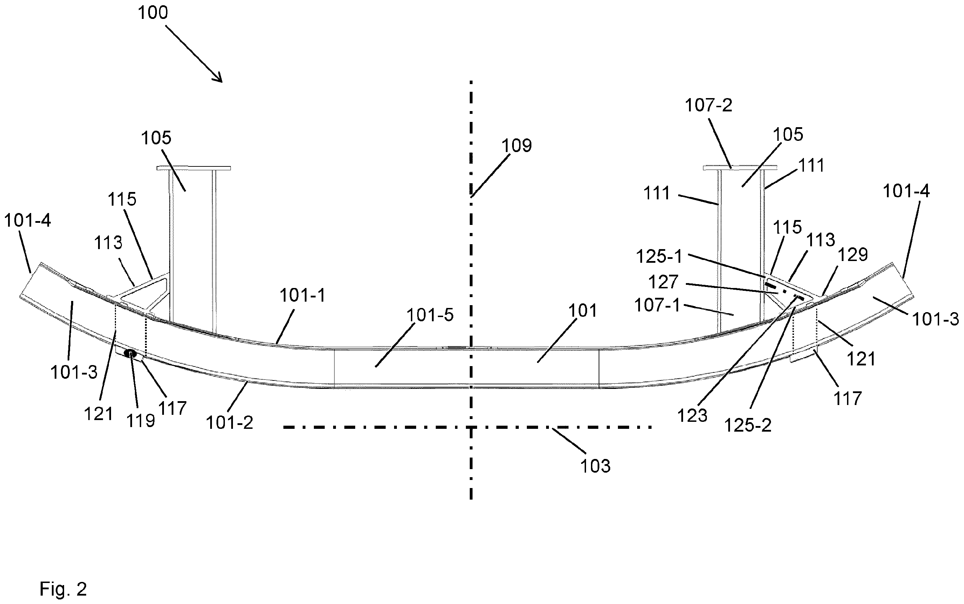

Fig. 2 zeigt eine Stoßfängeranordnung gemäß einer zweiten Ausführungsform.

Die in der Fig. 2 dargestellte Stoßfängeranordnung 100 gemäß der zweiten Ausführungsform entspricht der in Fig. 1 dargestellten Stoßfängeranordnung 100 gemäß der ersten Ausführungsform, bis darauf, dass in der Stoßfängeranordnung 100 gemäß der zweiten Ausführungsform der zweite Befestigungsabschnitt 107-2 des Deformationsprofils 105 durch einen Flansch gebildet ist, welcher insbesondere mittels integriertem Ausformen und/oder Anfügen mit dem Deformationsprofil 105 gebildet ist.

Hierbei kann durch den als Flansch ausgebildeten zweiten Befestigungsabschnitt 107-2 eine besonders wirksame Befestigung des Deformationsprofils 105 an dem Fahrzeugbauteil sichergestellt werden, insbesondere ein Einstecken des Deformationsprofils 105 in einen nicht dargestellten Fahrzeuglängslenker realisiert werden.

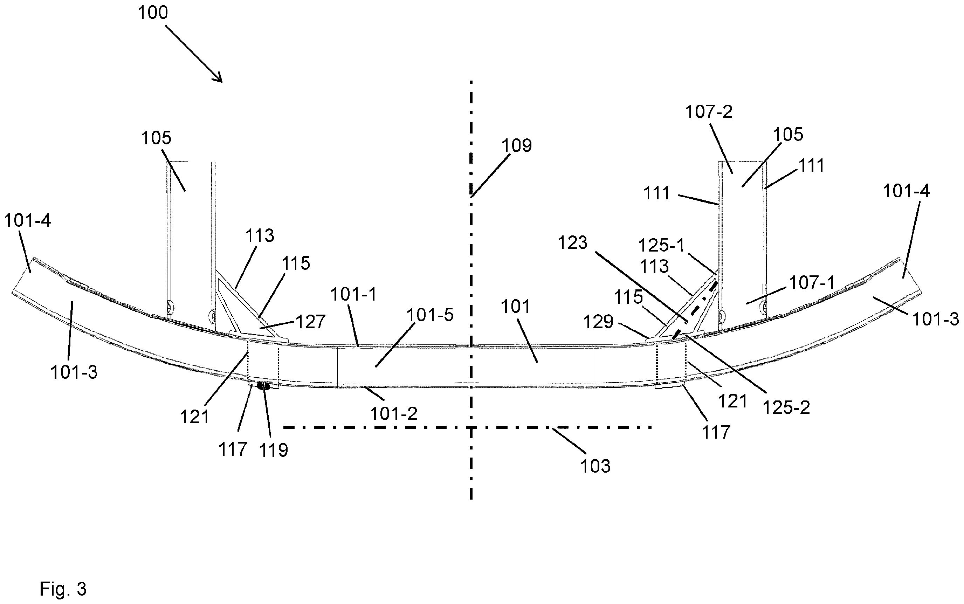

Fig. 3 zeigt eine Stoßfängeranordnung gemäß einer dritten Ausführungsform.

Die in der Fig. 3 dargestellte Stoßfängeranordnung 100 gemäß der dritten Ausführungsform entspricht der in Fig. 1 dargestellten Stoßfängeranordnung 100 gemäß der ersten Ausführungsform, bis darauf, dass in der Stoßfängeranordnung 100 gemäß der dritten Ausführungsform das zumindest eine Stützelement 113 mit der Seite des Deformationsprofils 105 verbunden ist, welches dem zumindest einen Stoßfängerende 101-4 des Stoßfängerendabschnitts 101-3, an dem das zumindest eine Stützelement 113 angeordnet ist, abgewandt ist.

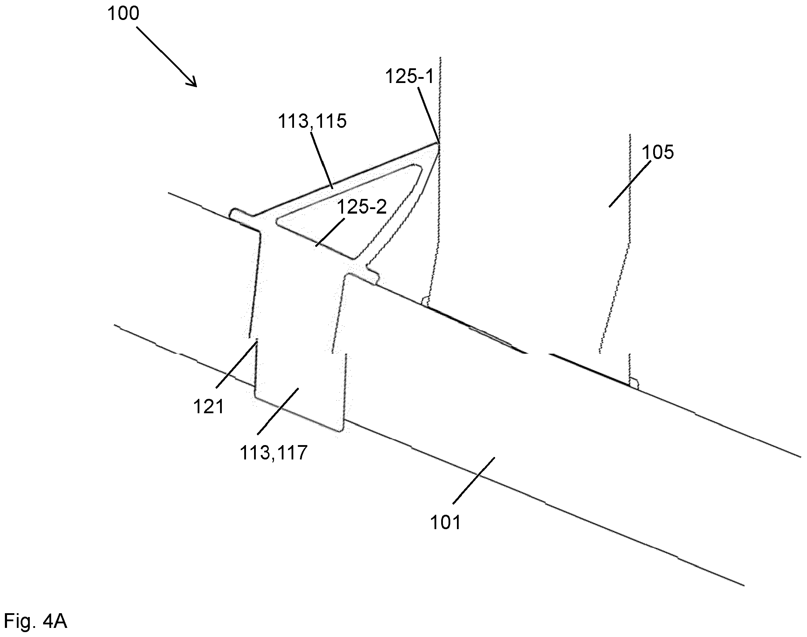

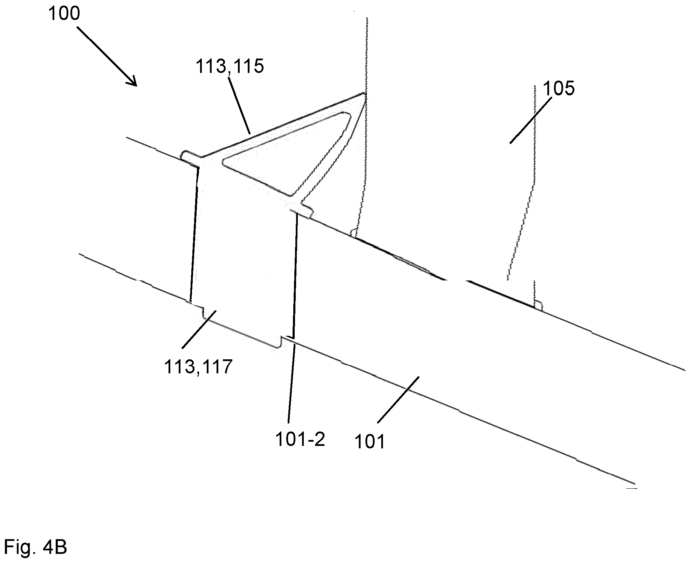

Die Figuren 4A und 4B zeigen Stoßfängeranordnungen gemäß weiterer Ausführungsformen.

Für Details in Bezug auf die in den Figuren 4A und 4B dargestellte Stoßfängeranordnungen 100 gemäß der weiteren Ausführungsformen wird auf die in Fig. 1 dargestellten Stoßfängeranordnung 100 gemäß der ersten Ausführungsform verwiesen. Anstatt einer Befestigungsfläche weist das erste Befestigungsende 125-1 des Stützprofils 115 des Stützelements 113 eine mit dem Deformationsprofil 105 stoffschlüssig verbundene Befestigungskante auf.

Dadurch wird ein eventuell schädlicher Einfluss der Stützelementbefestigung auf das Deformationsverhalten des Deformationsprofils 115 minimiert.

Zudem weist die in Fig. 4B dargestellte Stoßfängeranordnung 100 an der zweiten Stoßfängerseite 101-2 des Stoßfängers 101 einen zumindest abschnittsweise verjüngten Abschleppabschnitt 117 des Stützelements 123 auf.

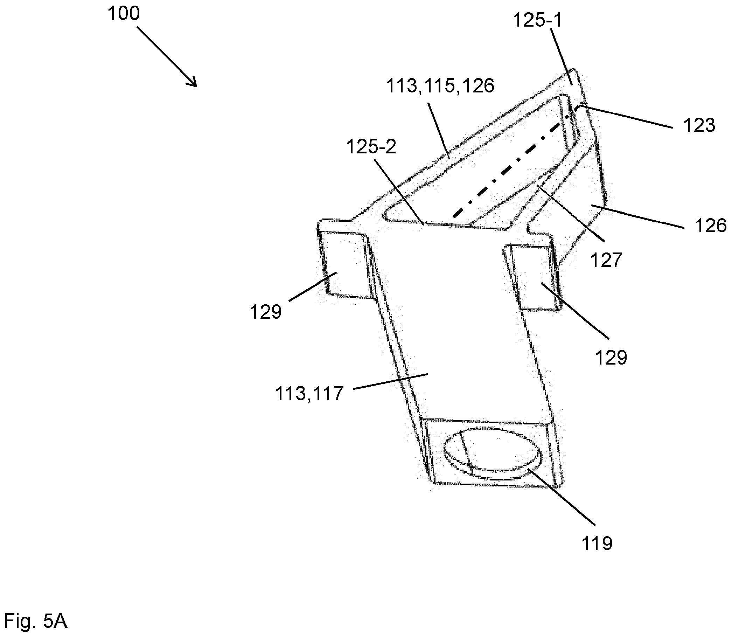

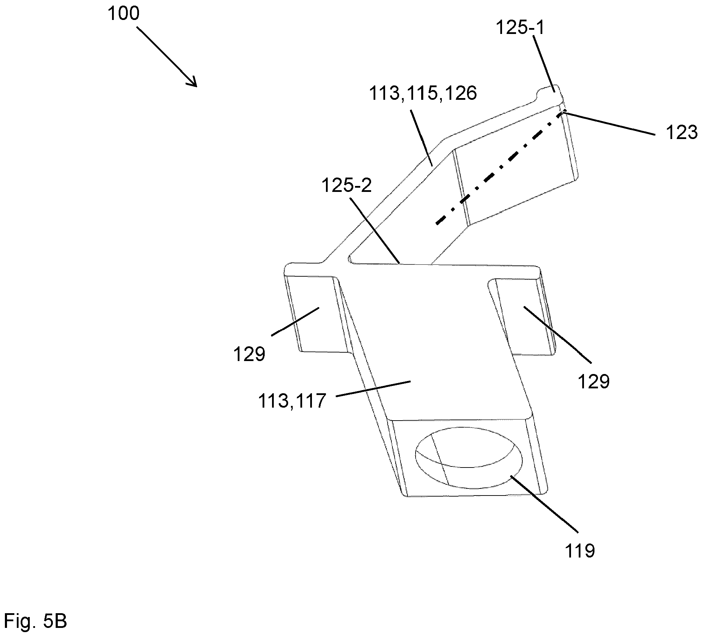

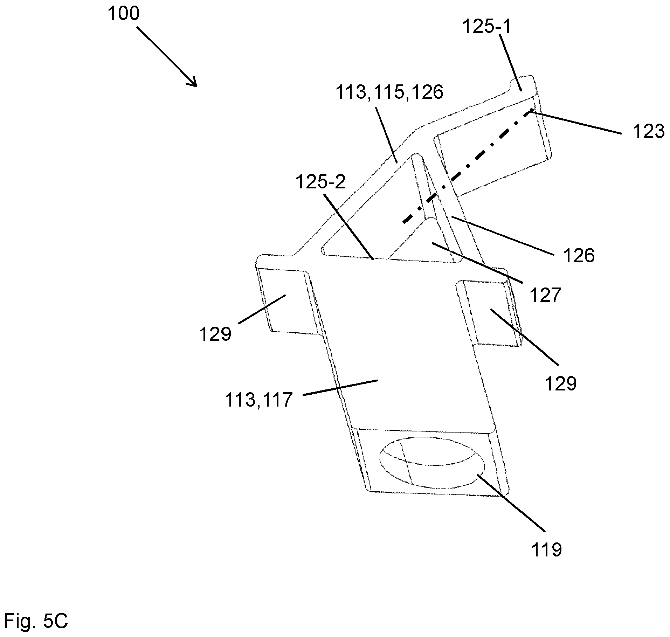

Die Figuren 5A, 5B, 5C zeigen Stützelemente von Stoßfängeranordnungen gemäß weiterer Ausführungsformen.

Das Stützelement 113 weist ein längliches Stützprofil 115 und einen Abschleppabschnitt 117 zum Aufnehmen eines in den Figuren 5A, 5B und 5C nicht dargestellten Abschleppmittels zum Abschleppen des Fahrzeugs auf. Das Stützprofil 115 weist eine Aussparung 127 und zumindest eine Stützwand 126 auf, welche die Aussparung 127 zumindest abschnittsweise begrenzt. Der Abschleppabschnitt 117 weist eine Öffnung 119 zum Aufnehmen des Abschleppmittels auf, wobei das Abschleppmittel insbesondere einen Abschlepphaken umfasst.

Insbesondere weist der Abschleppabschnitt ein in den Figuren 5A, 5B und 5C nicht dargestelltes separat oder integriert ausgebildetes Innengewinde oder ein Aufnahmebauteil mit einem Innengewinde auf, welches in der Öffnung 119 aufgenommen und mit dem Abschleppabschnitt 117 verbunden ist, wobei das Innengewinde zur Aufnahme des Abschleppmittels, insbesondere eines Abschlepphakens, ausgebildet ist.

Das Stützprofil 115 weist ein erstes Befestigungsende 125-1 auf, welches mit dem in den Figuren 5A, 5B und 5C nicht gezeigten Deformationsprofil 105 stoffschlüssig verbunden ist, wobei das erste Befestigungsende 125-1 insbesondere eine Befestigungsfläche umfasst. Das Stützprofil 115 weist ein zweites Befestigungsende 125-2 auf, welches mit dem Abschleppabschnitt 117 stoffschlüssig verbunden ist, und wobei sich der Abschleppabschnitt 117 von dem zweiten Befestigungsende 125-2 aus erstreckt.

Das in der Fig. 5B gezeigte Stützelement 113 weist nur eine Stützwand 126 auf, welche insbesondere als ein I- oder L-förmiges Profil ausgebildet ist. Das in der Fig. 5C gezeigte Stützelement 113 weist eine Mehrzahl von Stützwänden 126 auf, wobei eine der Stützwände 126 insbesondere ein I- oder L-förmiges Profil aufweist.

Für Details wird auf die Ausführungen zu dem in Fig. 1 dargestellten ersten Ausführungsbeispiel verwiesen.

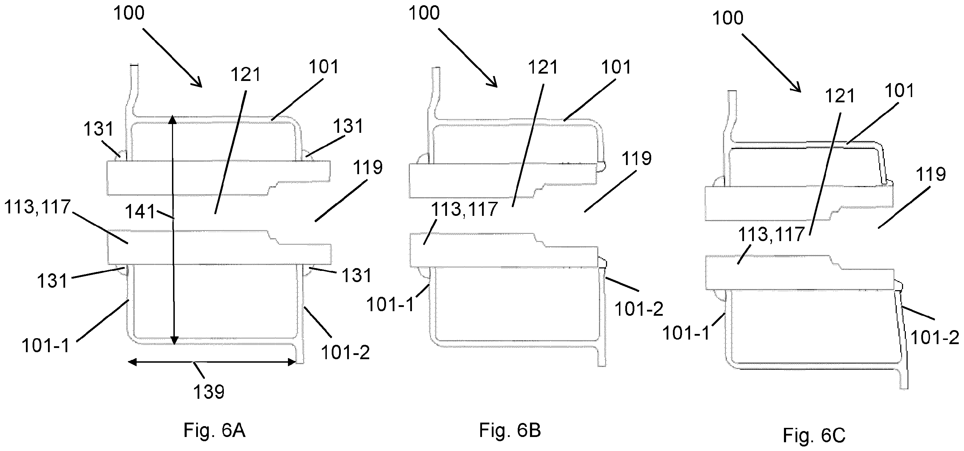

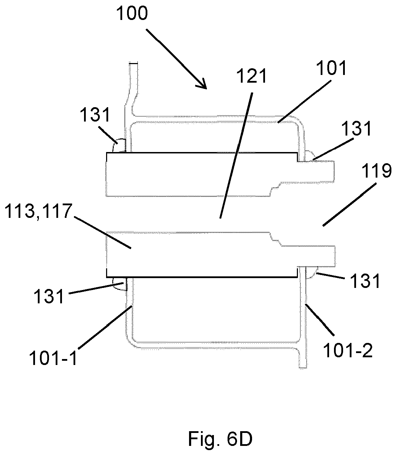

Die Figuren 6A, 6B, 6C und 6D zeigen in Stoßfängern angeordnete Stützelemente gemäß weiterer Ausführungsformen.

Die in den Figuren 6A, 6B, 6C und 6D gezeigten Darstellungen zeigen jeweils einen Stoßfänger 101 in einer Schnittansicht, wobei in dem Stoßfänger 101 jeweils ein Durchbruch 121 gebildet ist, welcher durch ein Abschleppmittel durchsetzbar ist. Der Stoßfänger 101 ist als Einkammerprofil mit einer Stoßfängerhöhe 141 und eine Stoßfängerbreite 139 ausgebildet, wobei die Stoßfängerhöhe 141 durch Flanschabschnitte an einer ersten und insbesondere an einer zweiten Stoßfängerseite 101-1, 101-2 wenigstens längenabschnittsweise vergrößert sein kann, um bei einem Frontalaufprall eine projizierte Aufprallfläche des Stoßfängers 101 zu vergrößern.

Ein Abschleppabschnitt 117 des Stützelements 113 durchsetzt den Stoßfänger 101, wobei der Abschleppabschnitt 117 eine Öffnung 119 zum Aufnehmen des Abschleppmittels aufweist. Der Abschleppabschnitt 117 ist durch eine Mehrzahl von Schweißnahten 131 mit dem Stoßfänger 101 verbunden.

Wie aus der in der Fig. 6A dargestellten Ausführungsform hervorgeht, durchdringt der Abschleppabschnitt 117 des Stützelements 113 den Stoßfänger 101 und ragt der Abschleppabschnitt 117 über die erste und zweite Stoßfängerseite 101-1, 101-2 hinaus.

Wie aus der in der Fig. 6B dargestellten Ausführungsform hervorgeht, durchdringt der Abschleppabschnitt 117 des Stützelements 113 den Stoßfänger 101 und ragt der Abschleppabschnitt 117 über die erste Stoßfängerseite 101-1 hinaus. Der Abschleppabschnitt 117 ist jedoch an der anderen Seite verkürzt und schließt mit der zweiten Stoßfängerseite 101-2 bündig ab. Die Verschweißung, bzw. Schweißnaht, ist weitgehend bündig zur zweiten Stoßfängerseite 101-2 und zwischen Profilwandkanten des Durchbruchs 121 angeordnet.

In der in der Fig. 6C dargestellten Ausführungsform ist die zweite Stoßfängerseite 101-2 des Stoßfängers 101 geneigt ausgebildet. Der Abschleppabschnitt 117 des Stützelements 113 ragt über die erste Stoßfängerseite 101-1 hinaus. Der Abschleppabschnitt 117 des Stützelements 113 durchdringt die zweite Stoßfängerseite 101-2 nur teilweise, so dass der Abschleppabschnitt 117 an einer Seite des Durchbruchs 121 mit der zweiten Stoßfängerseite 101-2 bündig abschließt und so dass der Abschleppabschnitt 117 an der anderen Seite des Durchbruchs 121 über die zweite Stoßfängerseite 101-2 hinausragt.

Die in der Fig. 6D dargestellte Ausführungsform entspricht der in Fig. 4B dargestellten Ausführungsform, wobei der Abschleppabschnitt 117 des Stützelements 123 an der zweiten Stoßfängerseite 101-2 des Stoßfängers 101 zumindest abschnittsweise verjüngt ausgebildet ist.

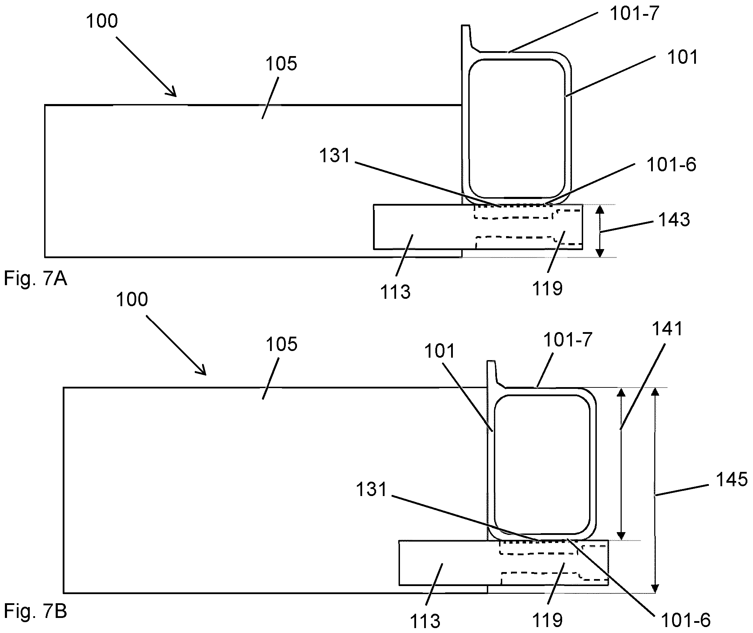

Die Figuren 7A und 7B zeigen Stoßfängeranordnungen gemäß weiterer Ausführungsformen.

Das Deformationsprofil 105, das Stützelement 113 und der Stoßfänger 101 der Stoßfängeranordnung sind in den Figuren 7A und 7B nur schematisch dargestellt.

Der Stoßfänger 101 weist eine untere Stoßfängerseite 101-6 auf, welche einem Boden zugewandt ist, und weist eine obere Stoßfängerseite 101-7 auf, welche einem Boden abgewandt ist, wobei der Abschleppabschnitt 117 des Stützelements 113 an der unteren Stoßfängerseite 101-6 befestigt, insbesondere durch eine Schweißnaht 131 befestigt, ist.

Die Öffnung 119 des Abschleppabschnitt 117 zum Aufnehmen des Abschleppmittels ist in den Figuren 7A und 7B nur schematisch dargestellt.

In der in Fig. 7A dargestellten Ausführungsform ist der Stoßfänger 101 gegenüber der unteren Kante des Deformationsprofils 105 um einen Versatz 143 versetzt angeordnet. Somit weist der Stoßfänger 101 eine Stoßfängerhöhe 141 auf, welche geringer als eine Höhe 145 des Deformationsprofils 105 ist.

In einer den Figuren 7A und 7B nicht dargestellten alternativen Ausführungsform kann der Abschleppabschnitt 117 des Stützelements 113 auch an der oberen Stoßfängerseite 101-7 befestigt sein.

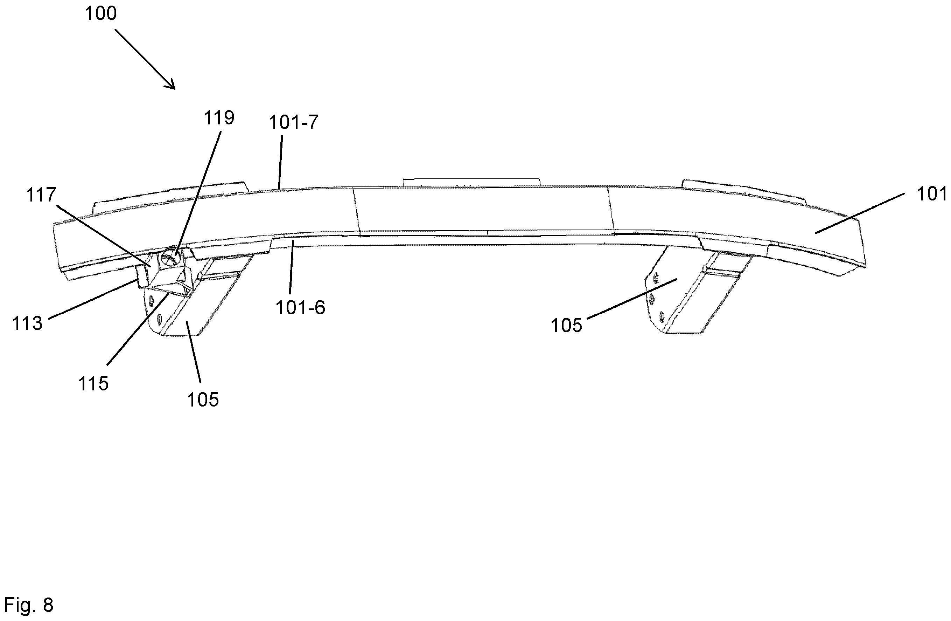

Fig. 8 zeigt eine Stoßfängeranordnung gemäß einer weiteren Ausführungsform.

Für Details in Bezug auf die in Fig. 8 dargestellte Stoßfängeranordnung 100 mit den Deformationsprofile 105, dem Stoßfänger 101 und dem Stützelement 113 wird auf die vorangegangenen Ausführungen verwiesen.

In der in Fig. 8 dargestellte Ausführungsform weist die Stoßfängeranordnung 100 nur ein einziges Stützelement 113, welches mit einem der beiden Deformationsprofile 105 verbunden ist. Der Stoßfänger 101 weist keinen Durchbruch 121 auf, sondern das Stützelement 113 ist hierbei an einer dem Boden zugewandten unteren Stoßfängerseite 101-6 des Stoßfängers 101 befestigt.

Alternativ ist auch eine Befestigung des Stützelement 113 an einer dem Boden abgewandten oberen Stoßfängerseite 101-7 des Stoßfängers 101 möglich.

### Bezugszeichenliste

- 100: Stoßfängeranordnung
- 101: Stoßfänger
- 101-1: Erste Stoßfängerseite
- 101-2: Zweite Stoßfängerseite
- 101-3: Stoßfängerendabschnitt
- 101-4: Stoßfängerende
- 101-5: Stoßfängerverbindungsabschnitt
- 101-6: Untere Stoßfängerseite
- 101-7: Obere Stoßfängerseite
- 103: Stoßfängerachse
- 105: Deformationsprofil
- 107-1: Erster Befestigungsabschnitt
- 107-2: Zweiter Befestigungsabschnitt
- 109: Profilachse
- 111: Profilwand
- 113: Stützelement
- 115: Stützprofil
- 117: Abschleppabschnitt
- 119: Öffnung
- 121: Durchbruch
- 123: Stützprofillängsachse
- 125-1: Erstes Befestigungsende
- 125-2: Zweites Befestigungsende
- 126: Stützwand
- 127: Aussparung
- 129: Stützprofilflansch
- 131: Schweißnaht
- 133: Erster Abstand
- 135: Zweiter Abstand
- 137: Länge des Stoßfängerendabschnitts
- 139: Stoßfängerbreite
- 141: Stoßfängerhöhe
- 143: Versatz
- 145: Höhe des Deformationsprofils

## Patentansprüche

1. Stoßfängeranordnung (100) für ein Fahrzeug, mit:
einem Stoßfänger (101), welcher entlang einer Stoßfängerachse (103) verläuft und ausgebildet ist, Aufprallenergie aufzunehmen;
einem Deformationsprofil (105) zum Befestigen des Stoßfängers (101) an einem Fahrzeugbauteil, wobei das Deformationsprofil (105) einen ersten Befestigungsabschnitt (107-1) zum Befestigen des Deformationsprofils (105) an dem Stoßfänger (101) und einen zweiten Befestigungsabschnitt (107-2) zum Befestigen des Deformationsprofils (105) an dem Fahrzeugbauteil aufweist; und einem Stützelement (113), mit einem Stützprofil (115), welches winklig zwischen dem Deformationsprofil (105) und dem Stoßfänger (101) verläuft,
wobei das Stützelement (113) einen Abschleppabschnitt (117) zum Aufnehmen eines Abschleppmittels zum Abschleppen des Fahrzeugs aufweist, wobei das Stützprofil (115) mit dem Stoßfänger (101) und mit dem Deformationsprofil (105) verbunden ist, wobei der Abschleppabschnitt (117) innerhalb oder an dem Stoßfänger (101) befestigt ist, und eine Öffnung (119) zum Aufnehmen des Abschleppmittels aufweist,
wobei das Stützprofil (115) ein erstes Befestigungsende (125-1) aufweist, welches mit dem Deformationsprofil (105) stoffschlüssig, formschlüssig und/oder kraftschlüssig verbunden ist, wobei das Stützprofil (115) ein zweites Befestigungsende (125-2) aufweist, welches mit dem Abschleppabschnitt (117) stoffschlüssig verbunden ist, und wobei sich der Abschleppabschnitt (117) von dem zweiten Befestigungsende (125-2) aus erstreckt,
und wobei sich das Stützprofil (115) entlang einer Stützprofillängsachse (123) erstreckt wobei sich das Deformationsprofil (105) entlang einer Profilachse (109) erstreckt, **dadurch gekennzeichnet, dass** die Stützprofillängsachse (123) und die Profilachse (109) einen Winkel zwischen 30° und 70° einschließen.

2. Stoßfängeranordnung (100) nach Anspruch 1, wobei das erste Befestigungsende (125-1) eine mit dem Deformationsprofil (105) stoffschlüssig, formschlüssig und/oder kraftschlüssig verbundene Befestigungskante oder Befestigungsfläche aufweist.

3. Stoßfängeranordnung (100) nach einem der vorangehenden Ansprüche, wobei das Stützprofil (115) und der Abschleppabschnitt (117) einstückig ausgebildet sind.

4. Stoßfängeranordnung (100) nach einem der vorangehenden Ansprüche, wobei sich der Abschleppabschnitt (117) winklig von dem Stützprofil (115) erstreckt oder wobei der Abschleppabschnitt (117) und das Stützprofil (115) ein bogenförmiges Stützelement (113) bilden.

5. Stoßfängeranordnung (100) nach einem der vorangehenden Ansprüche, wobei die Stoßfängeranordnung (100) ein Innengewinde, welches in der Öffnung (119) aufgenommen und mit dem Abschleppabschnitt (117) integriert ausgebildet ist, oder ein Aufnahmebauteil mit einem Innengewinde aufweist, welches in der Öffnung (119) aufgenommen und mit dem Abschleppabschnitt (117) verbunden ist, aufweist, wobei das Innengewinde ausgebildet ist, ein Abschleppmittel zum Abschleppen eines Fahrzeugs aufzunehmen.

6. Stoßfängeranordnung (100) nach einem der vorangehenden Ansprüche, wobei in dem Stützprofil (115) eine Aussparung (127) gebildet ist, wobei die Aussparung (127) durch zumindest eine Stützwand (126) des Stützprofils (115) begrenzt ist.

7. Stoßfängeranordnung (100) nach einem der vorangehenden Ansprüche, wobei sich ein Durchbruch (121) von einer dem Deformationsprofil (105) zugewandten ersten Stoßfängerseite (101-1) des Stoßfängers (101) zu einer dem Deformationsprofil (105) abgewandten zweiten Stoßfängerseite (101-2) des Stoßfängers (101) erstreckt.

8. Stoßfängeranordnung (100) nach Anspruch 7, wobei der Abschleppabschnitt (117) mit einer Profilwand des Stoßfängers (101) an der zweiten Stoßfängerseite (101-2) bündig abschließt oder über eine Profilwand des Stoßfängers (101) an der zweiten Stoßfängerseite (101-1, 101-2) hinausragt.

9. Stoßfängeranordnung (100) nach einem der vorangehenden Ansprüche, wobei der Stoßfänger (101) ein Einkammerprofil aufweist und eine Stoßfängerhöhe des Stoßfängers (101) größer als das 1,2-fache einer Stoßfängertiefe des Stoßfängers (101) ist, oder wobei der Stoßfänger (101) ein Zweikammerprofil aufweist und eine Stoßfängerhöhe des Stoßfängers (101) größer als das 1,3-fache einer Stoßfängertiefe des Stoßfängers (101) oder eines offenen Kammerprofils des Stoßfängers (101) ist.

10. Stoßfängeranordnung (100) nach einem der vorangehenden Ansprüche, wobei in dem Stoßfänger (101) ein Durchbruch (121) gebildet ist, welcher durch das Abschleppmittel durchsetzbar ist, wobei der Abschleppabschnitt (117) des Stützelements (113) den Durchbruch (121) durchsetzt.

11. Stoßfängeranordnung (100) nach einem der vorangehenden Ansprüche 1 bis 9, wobei der Stoßfänger (101) eine untere Stoßfängerseite (101-6), welche einem Boden zugewandt ist, und eine obere Stoßfängerseite (101-7), welche einem Boden abgewandt ist, aufweist, wobei der Abschleppabschnitt (117) an der unteren Stoßfängerseite (101-6) und/oder an der oberen Stoßfängerseite (101-7) befestigt ist.

## Claims

1. Bumper arrangement (100) for a vehicle, comprising:
a bumper (101) which runs along a bumper axis (103) and is configured to absorb impact energy;
a deformation profile (105) for fastening the bumper (101) to a vehicle component, wherein the deformation profile (105) comprises a first fastening section (107-1) for fastening the deformation profile (105) to the bumper (101) and a second fastening section (107-2) for fastening the deformation profile (105) to the vehicle component; and
a support element (113) comprising a support profile (115) which runs angularly between the deformation profile (105) and the bumper (101),
wherein the support element (113) comprises a towing section (117) for receiving a towing means for towing the vehicle, wherein the support profile (115) is connected to the bumper (101) and to the deformation profile (105), wherein the towing section (117) is fastened inside or at the bumper (101), and comprises an opening (119) for receiving the towing means,
wherein the support profile (115) comprises a first fastening end (125-1) which is materially, form-fittingly and/or force-fittingly connected to the deformation profile (105), wherein the support profile (115) comprises a second fastening end (125-2) which is materially connected to the towing section (117), and wherein the towing section (117) extends from the second fastening end (125-2),
and wherein the support profile (115) extends along a support profile longitudinal axis (123), wherein the deformation profile (105) extends along a profile axis (109), **characterized in that** the support profile longitudinal axis (123) and the profile axis (109) confine an angle between 30° and 70°.

2. Bumper arrangement (100) according to claim 1, wherein the first fastening end (125-1) comprises a fastening edge or fastening surface materially, form-fittingly and/or force-fittingly connected to the deformation profile (105).

3. Bumper arrangement (100) according to any one of the preceding claims, wherein the support profile (115) and the towing section (117) are integrally formed.

4. Bumper arrangement (100) according to any one of the preceding claims, wherein the towing section (117) extends at an angle from the support profile (115) or wherein the towing section (117) and the support profile (115) form an arcuate support element (113).

5. Bumper arrangement (100) according to any one of the preceding claims, wherein the bumper arrangement (100) comprises an internal thread which is received in the opening (119) and is integrally formed with the towing section (117), or a receiving component comprising an internal thread which is received in the opening (119) and connected to the towing section (117), wherein the internal thread is configured to receive a towing means for towing a vehicle.

6. Bumper arrangement (100) according to any one of the preceding claims, wherein a recess (127) is formed in the support profile (115), wherein the recess (127) is limited by at least one support wall (126) of the support profile (115).

7. Bumper arrangement (100) according to any one of the preceding claims, wherein a gap (121) extends from a first bumper side (101-1) of the bumper (101) facing the deformation profile (105) to a second bumper side (101-2) of the bumper (101) facing away from the deformation profile (105).

8. Bumper arrangement (100) according to claim 7, wherein the towing section (117) levelly ends with a profile wall of the bumper (101) on the second bumper side (101-2) or protrudes beyond a profile wall of the bumper (101) on the second bumper side (101-1, 101-2).

9. Bumper arrangement (100) according to any one of the preceding claims, wherein the bumper (101) comprises a single-chamber profile and a bumper height of the bumper (101) is greater than 1.2 times a bumper depth of the bumper (101), or wherein the bumper (101) comprises a two-chamber profile and a bumper height of the bumper (101) is greater than 1.3 times a bumper depth of the bumper (101) or an open chamber profile of the bumper (101).

10. Bumper arrangement (100) according to any one of the preceding claims, wherein a gap (121) is formed in the bumper (101) which can be penetrated by the towing means, wherein the towing section (117) of the support element (113) penetrates the gap (121).

11. Bumper arrangement (100) according to any one of the preceding claims 1 to 9, wherein the bumper (101) comprises a lower bumper side (101-6) facing a floor and an upper bumper side (101-7) facing away from a floor, wherein the towing section (117) is attached on the lower bumper side (101-6) and/or on the upper bumper side (101-7).

## Revendications

1. Agencement de pare-chocs (100) pour un véhicule, comprenant :
un pare-chocs (101), qui s'étend le long d'un axe de pare-chocs (103) et est configuré pour absorber une énergie d'impact ;
un profilé de déformation (105) pour la fixation du pare-chocs (101) sur un composant de véhicule, le profilé de déformation (105) comprenant une première section de fixation (107-1) pour la fixation du profilé de déformation (105) sur le pare-chocs (101) et une deuxième section de fixation (107-2) pour la fixation du profilé de déformation (105) sur le composant de véhicule ; et
un élément de support (113), muni d'un profilé de support (115), qui s'étend à un angle entre le profilé de déformation (105) et le pare-chocs (101),
l'élément de support (113) comprenant une section de remorquage (117) pour la réception d'un moyen de remorquage pour le remorquage du véhicule, le profilé de support (115) étant relié au pare-chocs (101) et au profilé de déformation (105), la section de remorquage (117) étant fixée à l'intérieur du ou sur le pare-chocs (101), et comprenant une ouverture (119) pour la réception du moyen de remorquage,
le profilé de support (115) comprenant une première extrémité de fixation (125-1), qui est reliée au profilé de déformation (105) par accouplement de matière, par accouplement de forme et/ou par accouplement de force, le profilé de support (115) comprenant une deuxième extrémité de fixation (125-2), qui est reliée à la section de remorquage (117) par accouplement de matière, et la section de remorquage (117) s'étendant à partir de la deuxième extrémité de fixation (125-2),
et le profilé de support (115) s'étendant le long d'un axe longitudinal de profilé de support (123), le profilé de déformation (105) s'étendant le long d'un axe de profilé (109), **caractérisé en ce que** l'axe longitudinal de profilé de support (123) et l'axe de profilé (109) forment un angle compris entre 30° et 70°.

2. Agencement de pare-chocs (100) selon la revendication 1, dans lequel la première extrémité de fixation (125-1) comprend un bord de fixation ou une surface de fixation relié au profilé de déformation (105) par accouplement de matière, par accouplement de forme et/ou par accouplement de force.

3. Agencement de pare-chocs (100) selon l'une quelconque des revendications précédentes, dans lequel le profilé de support (115) et la section de remorquage (117) sont configurés d'un seul tenant.

4. Agencement de pare-chocs (100) selon l'une quelconque des revendications précédentes, dans lequel la section de remorquage (117) s'étend à un angle à partir du profilé de support (115) ou dans lequel la section de remorquage (117) et le profilé de support (115) forment un élément de support en forme d'arc (113) .

5. Agencement de pare-chocs (100) selon l'une quelconque des revendications précédentes, dans lequel l'agencement de pare-chocs (100) comprend un filetage intérieur, qui est reçu dans l'ouverture (119) et est configuré de manière intégrée avec la section de remorquage (117), ou un composant de réception muni d'un filetage intérieur, qui est reçu dans l'ouverture (119) et est relié à la section de remorquage (117), le filetage intérieur étant configuré pour recevoir un moyen de remorquage pour le remorquage d'un véhicule.

6. Agencement de pare-chocs (100) selon l'une quelconque des revendications précédentes, dans lequel un évidement (127) est formé dans le profilé de support (115), l'évidement (127) étant délimité par au moins une paroi de support (126) du profilé de support (115).

7. Agencement de pare-chocs (100) selon l'une quelconque des revendications précédentes, dans lequel une percée (121) s'étend à partir d'un premier côté de pare-chocs (101-1) du pare-chocs (101) tourné vers le profilé de déformation (105) jusqu'à un deuxième côté de pare-chocs (101-2) du pare-chocs (101) détourné du profilé de déformation (105).

8. Agencement de pare-chocs (100) selon la revendication 7, dans lequel la section de remorquage (117) se termine en affleurement avec une paroi de profilé du pare-chocs (101) sur le deuxième côté de pare-chocs (101-2) ou fait saillie au-delà d'une paroi de profilé du pare-chocs (101) sur le deuxième côté de pare-chocs (101-1, 101-2).

9. Agencement de pare-chocs (100) selon l'une quelconque des revendications précédentes, dans lequel le pare-chocs (101) comprend un profilé à une chambre et une hauteur de pare-chocs du pare-chocs (101) est supérieure à 1,2 fois une profondeur de pare-chocs du pare-chocs (101), ou dans lequel le pare-chocs (101) comprend un profilé à deux chambres et une hauteur de pare-chocs du pare-chocs (101) est supérieure à 1,3 fois une profondeur de pare-chocs du pare-chocs (101) ou d'un profilé de chambre ouvert du pare-chocs (101) .

10. Agencement de pare-chocs (100) selon l'une quelconque des revendications précédentes, dans lequel une percée (121) est formée dans le pare-chocs (101), qui peut être traversée par le moyen de remorquage, la section de remorquage (117) de l'élément de support (113) traversant la percée (121).

11. Agencement de pare-chocs (100) selon l'une quelconque des revendications 1 à 9 précédentes, dans lequel le pare-chocs (101) comprend un côté de pare-chocs inférieur (101-6), qui est tourné vers un sol, et un côté de pare-chocs supérieur (101-7), qui est détourné d'un sol, la section de remorquage (117) étant fixée au côté de pare-chocs inférieur (101-6) et/ou au côté de pare-chocs supérieur (101-7).
